# EUROPEAN PATENT APPLICATION

(11) **EP 1 674 340 A1**
(43) Date of publication of application: **28.06.2006**
(21) Application number: 05256734.4
(22) Date of filing: 31.10.2005
(51) Int. Cl.: B60R 1/10

(54) **Outer mirror with front view arrangement**

(30) Priority: 17.12.2004 JP 2004366845
(71) Applicant: Murakami Corporation, Shizuoka-shi Shizuoka 422-8569 (JP)
(72) Inventor: Suzuki, Hisaya, Murakami Corporation, Fujieda-shi Shizuoka (JP); Matsuura, Masaaki, Murakami Corporation, Fujieda-shi Shizuoka (JP); Motomiya, Masahiro, Murakami Corporation, Fujieda-shi Shizuoka (JP)
(74) Representative: Piésold, Alexander James

(57) **Abstract**

An outer mirror includes a mirror base (10) having a protrusion (11A) extending laterally from a side face of a vehicle body (A) in use; a shaft (10A) extending upwardly from the protrusion (11A); a mirror housing (20) rotatably mounted on the shaft (10A); a mirror (30) for reflecting a rear view mounted on the mirror housing (20); and an auxiliary mirror (40) mounted on the mirror housing (20). This auxiliary mirror (40) is for reflecting an area diagonally forward along the side face of the vehicle body (A) and located below an upper face (11A1) of the protrusion (11A).

## Description

The present invention relates to an outer mirror (exterior rearview mirror) to be attached to a side door of a vehicle or a surrounding area of the side door.

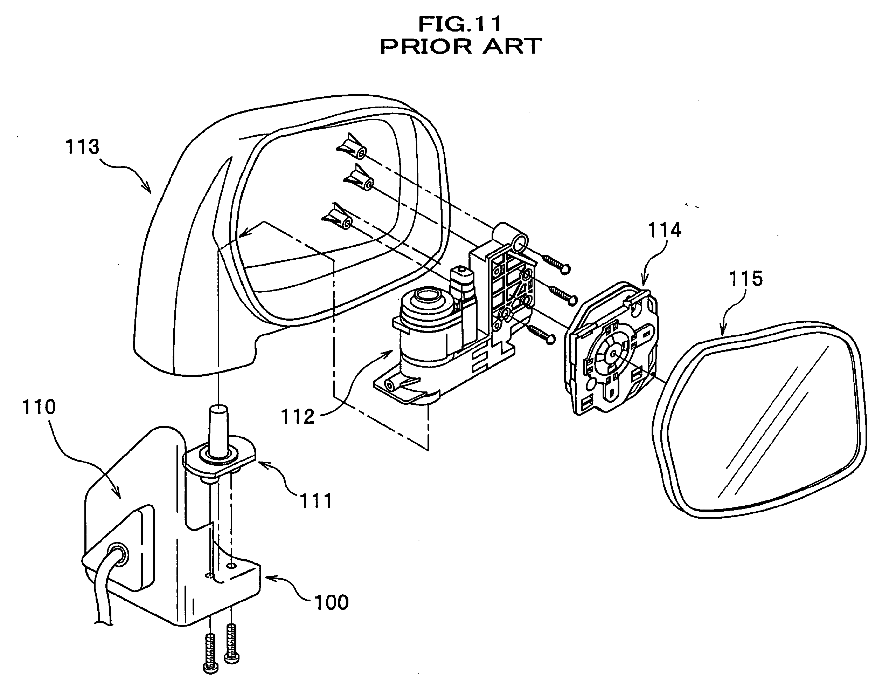

A typical outer mirror mainly includes, as shown in FIG. 11: a mirror base 110 that has a protrusion 100 extending laterally from a side face of a vehicle body (not shown); a shaft 111 fixed onto the upper surface of the protrusion 100; a driving unit 112 set on the shaft 111; a mirror housing 113 rotatably mounted on the shaft 111 through the driving unit 112; an actuator 114 for adjusting a tilt of a mirror surface; and a mirror 115 mounted on the mirror housing 113 through the actuator 114 with the mirror 115 covering a rear side opening 113A of the mirror housing 113.

Recently, an auxiliary mirror has been proposed which is provided on an outer mirror extending laterally from a side face of a vehicle body, for viewing the area diagonally forward the passenger seat of the vehicle body (see JP09-150674A, paragraphs 0029 - 0030 and JP2004-196206A).

For example, an outer mirror disclosed in JP09-150674A shown in FIG. 12 is composed of a mirror base 120; a stay 121 extending laterally from an upper portion of the mirror base 120; a mirror housing 122 supported by the bottom face of the end part of the stay 121; a mirror 123 mounted on the rear face of the mirror housing 122, for viewing the rear area; and an auxiliary mirror 124 mounted on the mirror housing 122 on the vehicle body side (not shown).

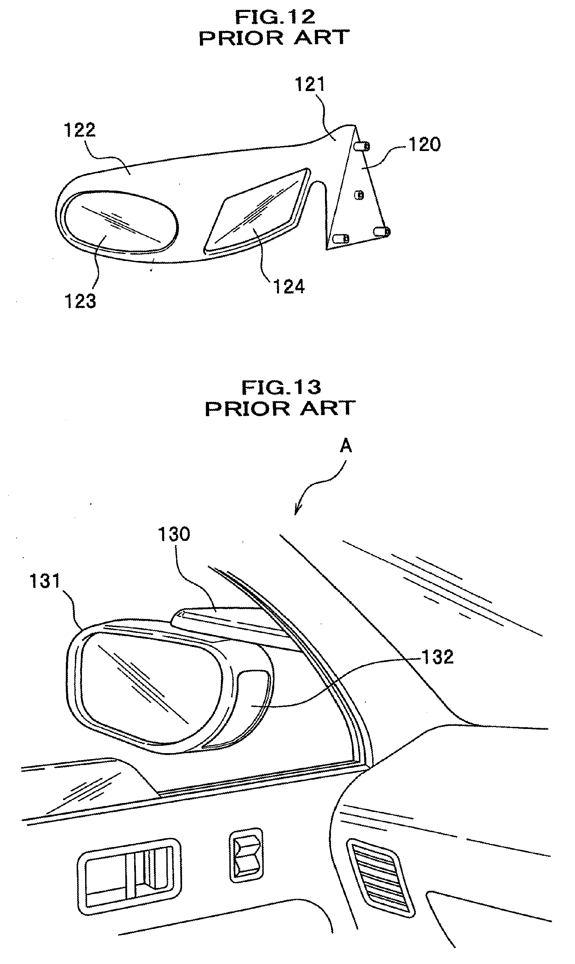

According to the above document, the auxiliary mirror 124 can reflect the area diagonally forward the passenger seat of the vehicle body, since the mirror housing 122 is supported by the stay 121 located above the mirror housing 122 and the viewing area is not blocked as shown in FIG. 12, unlike the outer mirror shown in FIG. 11 in which the mirror housing 113 is supported by the protrusion 100 of the mirror base 110 on the upper face of the protrusion 100.

However, the outer mirror of such a configuration has a problem in that it is impossible to adjust the tilt of the auxiliary mirror 124 in accordance with the visual point of a driver.

In this regard, an auxiliary mirror 132 disclosed in JP2004-196206A (paragraphs 0035 - 0037 and FIG. 9), shown in FIG 13, is capable of being adjusted, since a mirror housing 131 is rotatably suspended by a mirror base (protrusion) 130 so that the mirror housing 131 is adjustable relative to the mirror base 130.

There is a commonality between the outer mirror shown in FIG. 13 and that shown in FIG. 11 in that the mirror housing is rotatable. However, in the case of the outer mirror shown in FIG. 13, the mirror housing 131 is placed under the mirror base 130, while in the case of the outer mirror shown in FIG. 11, the mirror housing 113 is placed above the protrusion 100 of the mirror base 110. Therefore, it is difficult to apply the components of the outer mirror in FIG. 11, such as components related to rotation, to the outer mirror in FIG. 13, and there still remains a room for improvement from the viewpoint of manufacture.

It is therefore desirable to provide an outer mirror that allows viewing of the area diagonally forward the passenger seat of the vehicle body, while a mirror housing is placed above a mirror base.

In an aspect of the present invention, an outer mirror is provided which includes: a mirror base having a protrusion extending laterally from a side face of a vehicle body in use; a shaft extending upwardly from the protrusion; a mirror housing rotatably mounted on the shaft; a mirror mounted on the mirror housing, which mirror is for reflecting a rear view; and an auxiliary mirror mounted on the mirror housing, which auxiliary mirror is for reflecting an area diagonally forward along the passenger seat of the vehicle body, wherein the auxiliary mirror is located below an upper face of the protrusion.

According to this outer mirror, the mirror housing has the same structure as conventional mirror housings in that the mirror housing is supported by the protrusion on the upper face of the protrusion, i.e. rotatably fixed to the shaft standing upright on upper face of the protrusion. However, the outer mirror of the present invention has the auxiliary mirror positioned below the upper face of the protrusion. For this reason, the area diagonally forward the passenger seat of the vehicle body can be reflected on the outer mirror, unlike the conventional outer mirror. Because of this structure, the improvement in productivity is possible, while the outer mirror with excellent viewability is still achieved.

Since the auxiliary mirror is located below the upper face of the protrusion, a space formed under the protrusion can be utilized for effectively reflecting the area diagonally forward the passenger seat of the vehicle body.

Moreover, since the protrusion is located above the auxiliary mirror, the protrusion serves as a visor or eaves for the auxiliary mirror. For this reason, the auxiliary mirror is shielded from direct sunlight, rain water and the like, which provides the auxiliary mirror with excellent viewability.

In addition, it is preferable in the outer mirror that a gap be provided between the vehicle body and the auxiliary mirror.

Since the gap is provided between the vehicle body and the auxiliary mirror, the protrusion does not hinder the viewability of the auxiliary mirror when the auxiliary mirror is seen from the driver seat and the auxiliary mirror is kept exposed to the side face of the vehicle body, even though the structure of the conventional outer mirror is adopted, i.e. the mirror housing is supported by the protrusion on the upper face of the protrusion. As a result, the viewability of the auxiliary mirror is improved.

This gap allows wind stream hitting the outer mirror during running of the vehicle to smoothly pass rearward. As a result, turbulence caused by the outer mirror is reduced, which in turn lessens noise including wind roar. At the same time, wind stream passing through the gap will blow off rainwater or the like attached to the auxiliary mirror. Such a stream passing through the gap will further blow off rainwater or the like attached to the side window of the vehicle. Therefore, a clear area which is located on the sight line from the driver seat to the outer mirror is secured on the side window.

In addition, it is preferable in the outer mirror that the auxiliary mirror be located under an end part of the protrusion.

Since the auxiliary mirror is located under the end part of the protrusion, the gap between the side face of the vehicle body and the auxiliary mirror is effectively secured by the protrusion extending laterally from the side face of the vehicle body. Therefore, the outer mirror with the auxiliary mirror that can securely reflect the area diagonally forward the side face of the vehicle body is easily obtained.

In addition, it is preferable in the outer mirror that the gravity center of an assembly of the mirror housing be located laterally away from the protrusion in the protruding direction of the protrusion.

The gravity center of the mirror housing assembly is located laterally away from the protrusion in the protruding direction of the protrusion, which achieves the following effects. In the case of the conventional outer mirror as shown in FIG. 11 in which the whole assembly of the mirror housing is located above the protrusion, the gravity center of the assembly will not be located laterally away from the protrusion in the protruding direction of the protrusion, but further away in the upward oblique direction. In the case of the outer mirror of the present embodiment where the gravity center of the mirror housing assembly is located away from the protrusion in the protruding direction of the protrusion (horizontal direction), the distance between the root (fixing portion) of the protrusion and the gravity center is shorter than that of the outer mirror shown in FIG. 11, so that the mirror housing is held stably. Therefore, the vibration of the mirror housing during running of the vehicle is lessened effectively.

In addition, it is preferable in the outer mirror that an auxiliary rear view mirror for reflecting an area diagonally backward along the side face of the vehicle body be provided on the mirror housing at the position above the protrusion.

According to this outer mirror, the area diagonally backward the side face of the vehicle body can be checked by use of the auxiliary rear view mirror. When the auxiliary rear view mirror being combined with the mirror for viewing behind, the areas behind the vehicle body including those which in general cannot be seen from the driver seat can be easily checked. In addition, since the auxiliary rear view mirror is mounted on the mirror housing at the position above the protrusion, the shift of the sight line from the rear view mirror is maintained minimum, which gives an excellent viewability.

In addition, it is preferable in the outer mirror that a driving device for rotating the mirror housing relative to the protrusion be held at the position above the protrusion in the mirror housing.

Since the driving device held in the mirror housing is located above the upper face of the protrusion, the structure of the conventional outer mirror in which the mirror housing is supported by the protrusion on the upper face of the protrusion can be adopted, which allows the use of the components including the driving device available on the market. As a result, the productivity is improved.

Further, it is preferable in the outer mirror that the auxiliary mirror is located above a bottom edge line of a side window of the vehicle body in use.

In this outer mirror, the auxiliary mirror and the side window are situated side by side. For this reason, the auxiliary mirror can be securely checked from the driver seat.

When the outer mirror is mounted on the vehicle body at such a position, the protrusion located above the auxiliary mirror is positioned higher than the protrusion of the conventional outer mirror of FIG. 11. Therefore, the protrusion is to be located out of the sight line from the driver seat to the auxiliary mirror, even though the structure of the conventional outer mirror is adopted, i.e. the mirror housing is supported by the protrusion on the upper face of the protrusion.

Preferred embodiments of the present invention will now be described by way of example only and with reference to the accompanying drawings in which:
FIG. 1 is a partial perspective view of a left side (passenger seat side) of a vehicle to which an outer mirror according to a first embodiment of the present invention is mounted.
FIG. 2 is a perspective view of the outer mirror seen from a driver seat.
FIG. 3 is an exploded perspective view showing a schematic structure of the outer mirror.
FIG. 4 is a schematic diagram explaining viewing areas reflected by the outer mirror.
FIG. 5 is a schematic diagram seen from the side of the vehicle body explaining viewing areas by the outer mirror.
Each of FIGs. 6A and 6B is a perspective view showing the outer mirror with a reflected image. FIG. 6A shows an image reflected when a vehicle is in a regular driving mode. FIG. 6B shows an image reflected when a shift lever is in a reverse position.
FIGs. 7A and 7B show modified embodiments of the outer mirror of the present invention.
FIGs. 8A and 8B are schematic diagrams depicting wind stream when the vehicle is running.
FIG. 9 is a perspective view of the front of an outer mirror according to the second embodiment of the present invention.
FIG. 10 is a perspective view of the rear of the outer mirror according to the second embodiment of the present invention.
FIG. 11 shows a conventional outer mirror.
FIG. 12 shows another conventional outer mirror.
FIG. 13 shows still another conventional outer mirror.

In the following description, the same components are designated with the same reference characters, and thus a duplicate description is omitted. The terms describing orientations, such as front, rear, lateral, upper and bottom, are used with reference to the vehicle body. With respect especially to a surface of an object, the expression " (on) the vehicle body side" frequently means that the surface is located closer to the vehicle body than other surfaces of the object.

### (First embodiment)

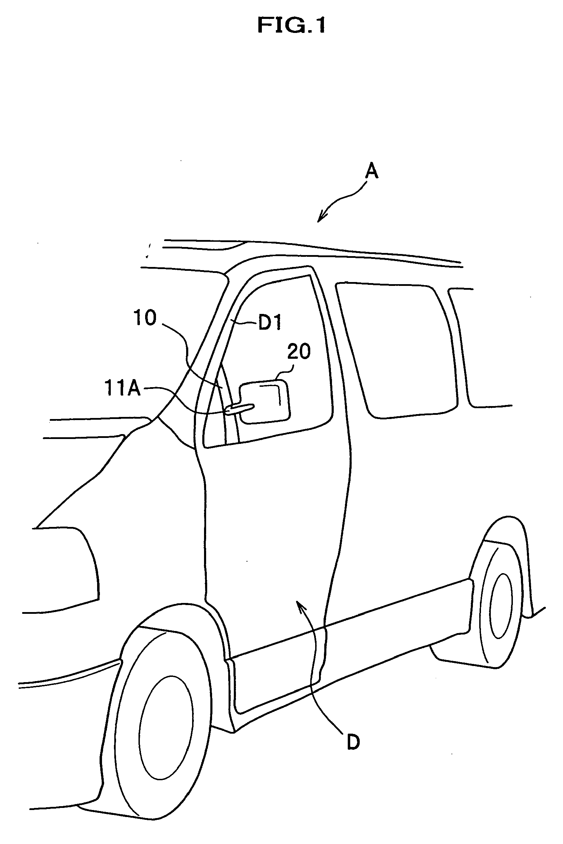

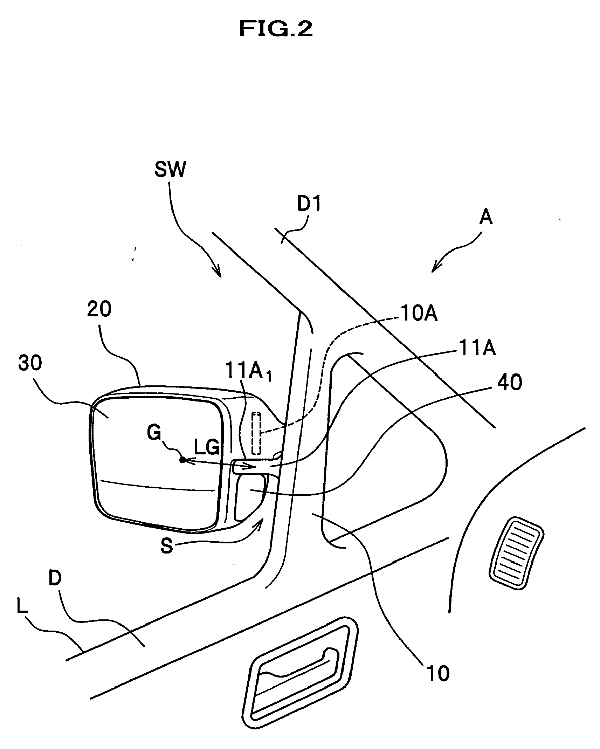

As shown in FIGs. 1 and 2, an outer mirror of this embodiment is what is called a door mirror, mounted on a front side door D on the passenger seat side of a vehicle body A. The outer mirror is composed of a mirror base 10 that has a protrusion 11A extending laterally from a side face of the vehicle body A, and a mirror housing 20 mounted on the upper side of the protrusion 11A. As shown in FIG. 2, a mirror 30 is provided on a rear face of the mirror housing 20, for viewing the rear area, and an auxiliary mirror 40 is provided on the vehicle body side surface of the mirror housing 20, for viewing an area diagonally forward the passenger seat of the vehicle body A, which is not seen directly from the driver seat.

In this embodiment, the outer mirror is an electrically-operated retractable mirror, and rotatably coupled to a shaft 10A mounted on the upper side of the protrusion 11A of the mirror base 10 (see FIG. 2).

Each component constituting the outer mirror will be described in detail below.

In this embodiment, the mirror base 10 is fixed to a window frame D1 of a front side door D, as shown in FIGs. 1 and 2. The mirror base 10 is composed of: a base main body 11; a base cover 12 covering the surface of the base main body 11 on the outer side A1 relative to the vehicle; a sealing member 13 fixed to the vehicle body side surface of the base main body 11; and a packing 14.

The base main body 11 is formed by, for example, aluminum die-casting, and has a base 11a in a shape of plate, and a protrusion 11A extending laterally (relative to the vehicle body A) from somewhat below the center of the side face of the base 11a. To the base 11a, the base cover 12 is fixed with screws (not shown). The base 11a is equipped with a mounting boss 11b on a face thereof opposed to the sealing member 13, with the mounting boss 11b jutting out to form a frame elongating in an upright direction. In the upper part and bottom part of the mounting boss 11b and the middle part surrounded by the mounting boss 11b, fixing holes 11e are formed each of which serves as a screw hole when the sealing member 13 is screwed to the base main body 11. The protrusion 11A is in a triangular shape which tapers from the base 11a to the end of the protrusion, when seen from the front side or rear side. The upper part of the protrusion 11A has a flat plate face, and the flat plate face has mounting holes 11c for mounting the shaft 10A and a leading hole 11d for leading a wire harness (not shown) from the inside of the mirror housing 20 to the vehicle body A, formed therein. Specifically, the wire harness is inserted into the leading hole 11d and pulled out from an opening 11f formed in the middle part of the base 11a surrounded by the mounting boss 11b.

The base cover 12 has a cover part 12a protruding from the vehicle body side to the outer side A1. The cover part 12a covers the protrusion 11A of the base main body 11 with at least the upper face of the protrusion 11A being exposed, when the base cover 12 and the base main body 11 are coupled together. The face of the base cover 12 for mounting the base body 11 has an insertion opening 12b communicating with the cover part 12a, and fixing holes 12c, 12c which serve as screw holes when the base main body 11 is screwed to the base cover 12. On the bottom part of the cover part 12a, insertion holes 12e are formed to face and align with the mounting-holes 11c in the protrusion 11A of the base main body 11. Coupling the base cover 12 to the base main body 11 is carried out simply by screwing screws (not shown) into the corresponding fixing holes 12c from the vehicle body side of the base main body 11. In the vicinity of each of the fixing holes 12c, 12c, a pair of hooks is provided which is engageable with respective engaging part (not shown) formed in the sealing member 13.

The sealing member 13 is in a form of plate, with the upper edge 13a and the bottom edge 13b of the plate being unparallel to each other, so that the edges fit to the corresponding edges on the vehicle body side surface of the base cover 12. In the middle part of the sealing member 13, a receiving recess 13c is formed for receiving the mounting boss 11b of the base main body 11. The receiving recess 13c has screw holes 13e corresponding to respective fixing holes 11e in the base main body 11, for inserting fixing screws (not shown). The receiving recess 13c has a drawing hole 13f at the position corresponding to the opening 11f of the base main body 11, for drawing the wire harness from the mirror base to the inside of the vehicle. Crease part 13g is formed in the vehicle body side surface of the sealing member 13, in order to facilitate the mounting of the packing 14 on the sealing member 13.

Coupling the sealing member 13 to the base main body 11 can be carried out simply by screwing screws (not shown) into the corresponding fixing holes 11e through the respective screw holes 13e from the vehicle body side of the sealing member 13. The packing 14 is mounted between the sealing member 13 and the mounting stage (not shown) on the vehicle body.

As shown in FIG. 2, the mirror housing 20 is horizontal-rotatably mounted on the upper side of the protrusion 11A through the shaft 10A. In the present embodiment, the mirror housing 20 is supported by the protrusion 11A at nearly the center of the vehicle body side surface of the mirror housing 20, so that the auxiliary mirror 40 is located below the upper face 11A1 of the protrusion 11A. In other words, the outer mirror of this embodiment has a similar structure to the conventional outer mirror (see FIG. 11) in that the mirror housing 20 is supported by the protrusion 11A on the upper face 11A1 of the protrusion 11A, while the auxiliary mirror 40 is still located below the upper face 11A1 of the protrusion 11A.

Further as shown in FIG. 2, the auxiliary mirror 40 is located under the end part (tip) of the protrusion 11A when mounted on the mirror housing 20. When being mounted, a gap S is provided between the vehicle body A and the mirror surface of the auxiliary mirror 40. In addition, when being mounted, the mirror housing 20 is located above the bottom edge line L of the side window SW of the vehicle body A. Moreover, the gravity center G of the mirror housing assembly is located laterally away from the protrusion 11A in the protruding direction of the protrusion 11A.

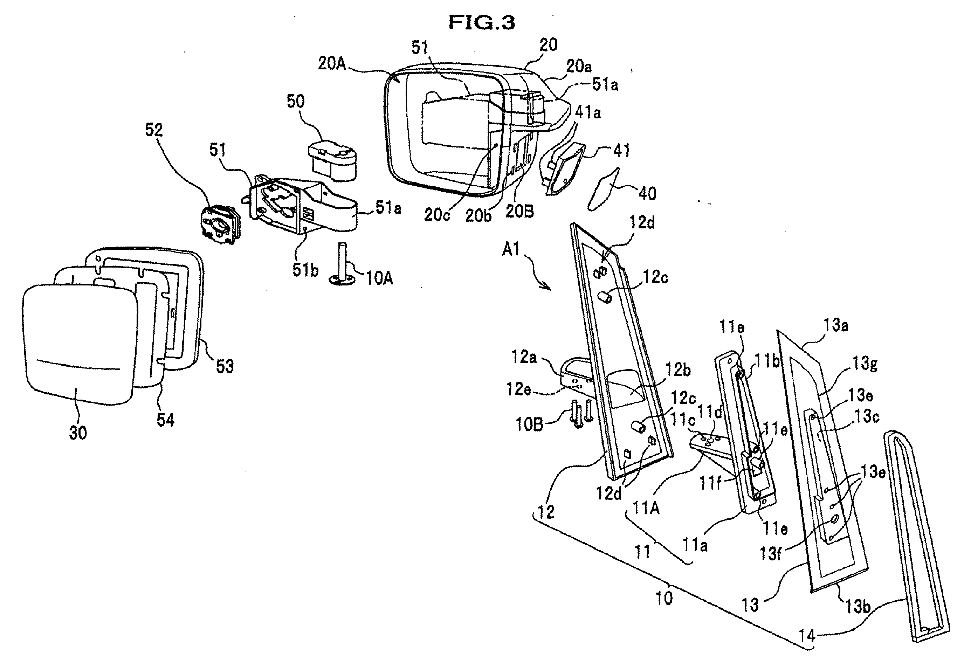

As shown in FIG. 3, the mirror housing 20 has an opening 20B that allows access to the inside of the mirror housing 20, on which opening the auxiliary mirror 40 is mounted by means of the mounting member 41 (which will be described below).

In the present embodiment, the auxiliary mirror 40 is mounted on the lower part of the vehicle body side surface of the mirror housing 20, not directly on the mirror housing 20 but by means of the mounting member 41 separate from the mirror housing 20, as shown in FIG. 3. The auxiliary mirror 40 is a wide-angle curved mirror and thus can reflect a wide area diagonally forward the side face of the vehicle body A, despite the limited area on the vehicle body side surface of the mirror housing 20. The mirror surface of the wide-angle curved mirror is in a shape obtained by cutting a segment out of a sphere. A radius of curvature of the auxiliary mirror 40 ranges from 100 mm to 1, 000 mm, preferably from 100 mm to 500 mm. When the radius of curvature is below 100 mm, the distortion of the image on the auxiliary mirror 40 becomes large, and it thus becomes difficult to recognize the image. When the radius of curvature is above 1,000 mm, the surface property becomes closer to that of the plane mirror, and the property of the wide-angle curved mirror is thus degraded. Therefore, with respect to the radius of curvature, the above-mentioned range from 100 mm to 1,000 mm is selected so that the distortion is reduced as well as the reflected area is wide. The above-mentioned range from 100 mm to 500 mm is preferably selected so that the wider area can be reflected, including the area diagonally forward the passenger seat of the vehicle body A as well as the area immediately below the mirror base 10.

The mounting member 41 has engaging hooks 41a on the back side of the face on which the auxiliary mirror 40 is mounted. By engaging the engaging hooks 41a with the engaging holes 20b formed in the lower part of the vehicle body side surface of the mirror housing 20, the auxiliary mirror 40 can be mounted. Since the mounting member 41 is a separate piece from the mirror housing 20 as explained above, the thickness thereof in the lateral direction relative to the vehicle body can be varied to thereby adjust the gap S, i.e. the distance between the mirror surface of the auxiliary mirror 40 and the side face of the base cover 12 of the mirror base 10 on the exterior side of the vehicle. Therefore, the auxiliary mirror 40 can appropriately reflect the image which may differ depending on types of vehicle, by selecting the mounting member 41 having a suitable thickness in the lateral direction relative to the vehicle body. In other words, the gap S can be adjusted simply by exchanging mounting member 41, and it is unnecessary to exchange the mirror housing 20 itself for different type of vehicle. As a result, there arises an advantage in that the auxiliary mirror can be standardized, thereby reducing overall costs. In addition, since the mounting member 41 is extremely smaller than the mirror housing 20, storing the parts for exchanging is facilitated, and the operation for exchange is kept simple.

Furthermore, as shown in FIG. 2, the auxiliary mirror 40 is oriented downward to some extent (to put it another way, the auxiliary mirror 40 is mounted in such manner that at least a part of the mirror face of the auxiliary mirror 40 can be seen from the position below the mirror base 10 (including the position immediately below)). By selecting the radius of curvature of the auxiliary mirror 40 within the range of 100 to 500 mm, the auxiliary mirror 40 can suitably reflect a wide area covering the area below the mirror base 10 to the area diagonally forward the side face of the vehicle body A. Generally, the lower part of the mirror housing 20 on the vehicle body side on which the auxiliary mirror 40 is mounted is configured to be thick in the front-rear direction, in order to deal with the wind stream while the vehicle is running. Therefore, the larger auxiliary mirror can be mounted, as compared with those mounted on other part of the vehicle (especially on other part of the outer mirror). Therefore, the auxiliary mirror 40 to be mounted at such a position is suitable for reflecting a wider area diagonally forward the side face of the vehicle body A.

By use of the fixing screws 10B, the above-mentioned shaft 10A is fixed to the protrusion 11A extending from the base main body 11 of the mirror base 10, and stands upright on the upper face of the protrusion 11A. Due to this structure, the fixing screws 10B need to be screwed into the protrusion 11A through the insertion openings 12e of the bottom face of the cover part 12a, in order to fix the shaft 10A. If a lower part of the vehicle body side surface of the mirror housing 20 is jutting out and covers the bottom face of the protrusion 11A, that is, covers the insertion holes 12e of the cover part 12a, it may become impossible to insert the fixing screws 10B into the insertion holes 12e. On the other hand, if the auxiliary mirror 40 is attached to the mirror housing 20 by means of the mounting member 41 as a separate part, the lower portion of the vehicle body side surface of the mirror housing 20 can be made flat, which allows the insertion holes 12e of the cover part 12a to be exposed completely. Therefore, insertion and screwing of the fixing screws 10B are facilitated.

In the mirror housing 20 above the upper face of the protrusion 11A (in the upper portion 20a on the side of the mirror housing 20), a driving device 50 is placed (in FIG. 3, shown with an alternate long and short dash line) which allows the mirror housing 20 to retract to the storage (folded) position or to resume the use (unfolded) position.

The driving device 50 includes a decelerator to be secured to the shaft 10A and a motor for generating driving force (both not shown), and the driving force generated by the motor is transferred to the shaft 10A through the decelerator. When the motor is activated, the mirror housing 20 pivots on the shaft 10A. By appropriately controlling the direction of the motor rotation, the mirror housing 20 is allowed to retract to the storage position or to resume the use position.

In the present embodiment, the driving device 50 is held in a holding part 51a formed on the vehicle body side of a frame 51 which is to be fixed to the interior of the mirror housing 20 (on the front side relative to the mirror 30). On the rear side of the frame 51, a mirror holder 53 is affixed through the actuator 52 which is for adjusting the tilt angle of the mirror 30. A sheet-shaped heater 54, which is to defrost the mirror 30, is placed between the mirror holder 53 and the mirror 30.

In the lower part of the vehicle body side surface of the frame 51, a screw hole 51b is provided with the opening thereof facing towards the vehicle body. A screw can be screwed into the screw hole 51b through the mounting hole 20c formed in the mirror housing 20.

It should be noted that size, shape and the like of the mirror housing 20 can be varied depending on the design or other factors, and the mirror housing should not be limited to those shown in the drawings. When the lower part of the mirror housing 20 on the vehicle body side is thickened in a front-rear direction of the vehicle, the mirror 40 of a larger size can be used, and accordingly, a wider area can be reflected on the mirror 40.

The wire harness (not shown) for providing electric power to the driving device 50 and the actuator 52 is routed through the shaft 10A. Then, it goes through the leading hole 11d formed in the protrusion 11A, the interior of the mirror base 10 (base main body 11), the drawing hole 13f formed in the sealing member 13 of the mirror base 10, and the interior of the vehicle body A. Finally, it is connected to the control unit (not shown) nearby the driver seat.

Assembly of the outer mirror according to this embodiment will be explained below with reference to FIG. 3.

First, the driving device 50 and the actuator 52 are built in the frame 51. This frame 51 is inserted into the mirror housing 20 through the opening 20A formed on the rear side of the mirror housing 20, and the frame 51 is fixed to the mirror housing 20 with fixing screws (not shown). This fixing process can be carried out through the opening 20B on the vehicle body side of the mirror housing 20 as well as the opening 20A on the rear side of the mirror housing 20. To put it another way, the frame 51 is fixed to the mirror housing 20 with the screws inserted in the directions perpendicular to each other, i.e. from the opening 20A and the opening 20B. The fixing of the frame 51 through the opening 20B is conducted as follows, as seen from FIG. 3: a screw (not shown) is inserted from the opening 20B, made to pass through the mounting hole 20c of the mirror housing 20, and screwed into the screw hole 51b.

Prior to fixing the frame 51 to the mirror housing 20, the shaft 10A is coupled to the driving device 50, and the wire harness is led out through'the hole in the shaft 10A. When the frame 51 is mounted in the mirror housing 20, the bottom part of the shaft 10A is exposed from the bottom opening of the upper portion 20a on the side of the mirror housing 20.

Next, the mirror holder 53 is fixed to the actuator 52 by means of claws and corresponding engaging mechanism thereof (not shown) . The heater 54 is attached to the back side of the mirror holder 53 by means of an adhesive tape or the like. The mirror 30 is attached to the back side of the heater 54 by means of an adhesive tape or the like.

The base main body 11 is covered with the base cover 12, and screws (not shown) are screwed from the base main body 11 on the vehicle body side into the respective fixing holes 12c formed in the base cover 12 to thereby integrate the base main body 11 and the base cover 12 into a single piece.

Subsequently, the shaft 10A of the mirror housing assembly is brought in proximity to the protrusion 11A of the base main body 11, and the wire harness is inserted into the leading hole 11d of the protrusion 11A of the base main body 11. The shaft 10A is placed over the protrusion 11A, and the fixing screws 10B are inserted from the bottom side of the cover part 12a of the base cover 12 through the respective mounting holes 11c of the protrusion 11A, and through the holes in the shaft 10A, to thereby fix the shaft 10A to the protrusion 11A.

The mounting member 41 is mounted on the lower part of the vehicle body side surface of the mirror housing 20, and the auxiliary mirror 40 is attached to the mounting member 41 with an adhesive tape or the like. It should be noted that, by attaching the auxiliary mirror 40 to the mounting member 41 in advance, assemblage can be conducted efficiently.

Next, the sealing member 13 is mounted on the base main body 11 by screwing screws into the fixing holes 11e of the base main body 11 through the screw holes 13e of the sealing member 13. Upon mounting the sealing member 13 on the base main body 11, the wire harness is led out from the drawing hole 13f of the sealing member 13.

The vehicle body side surface of the sealing member 13 is fixed with the fixing screws or the like to the mounting stage (not shown) provided on the window frame D1 of the front side door D of the vehicle body A, with the packing 14 being sandwiched between the sealing member 12 and the mounting stage. In this manner, the outer mirror is mounted to the vehicle body A.

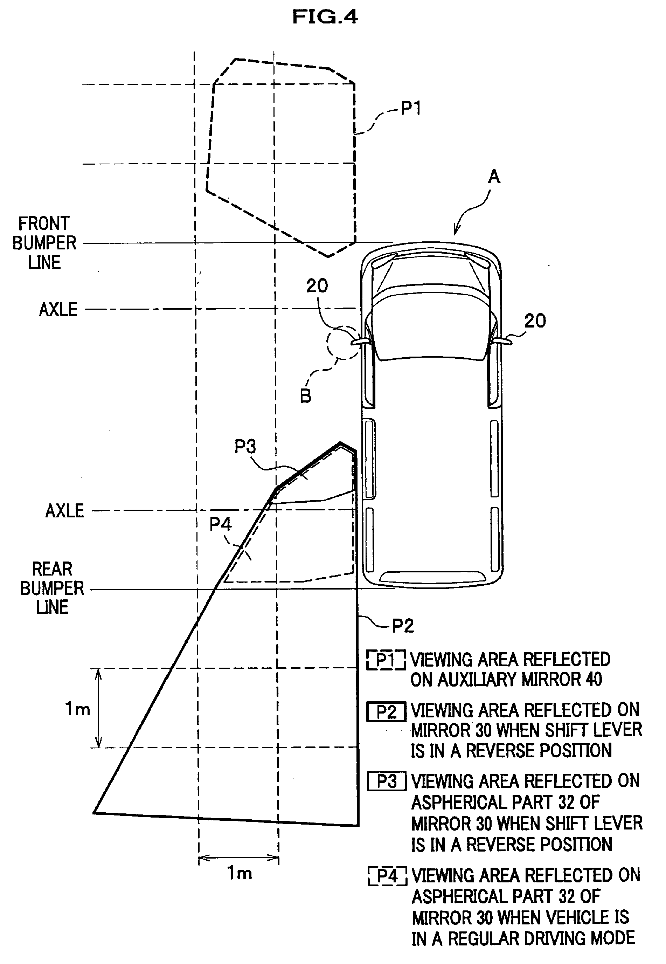

A viewing area from the driver seat of the vehicle that is equipped with the outer mirror will be explained below, with reference to FIGs. 4 - 6.

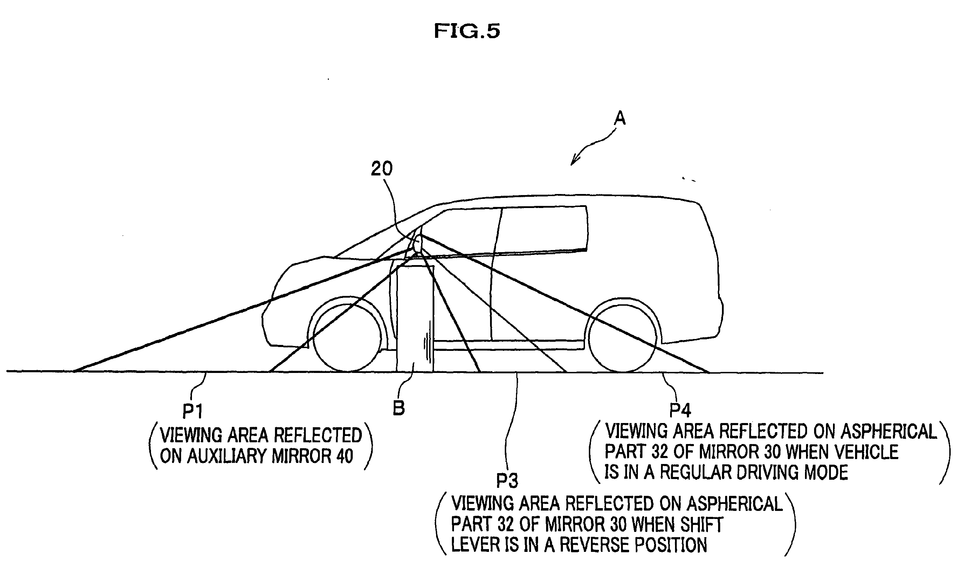

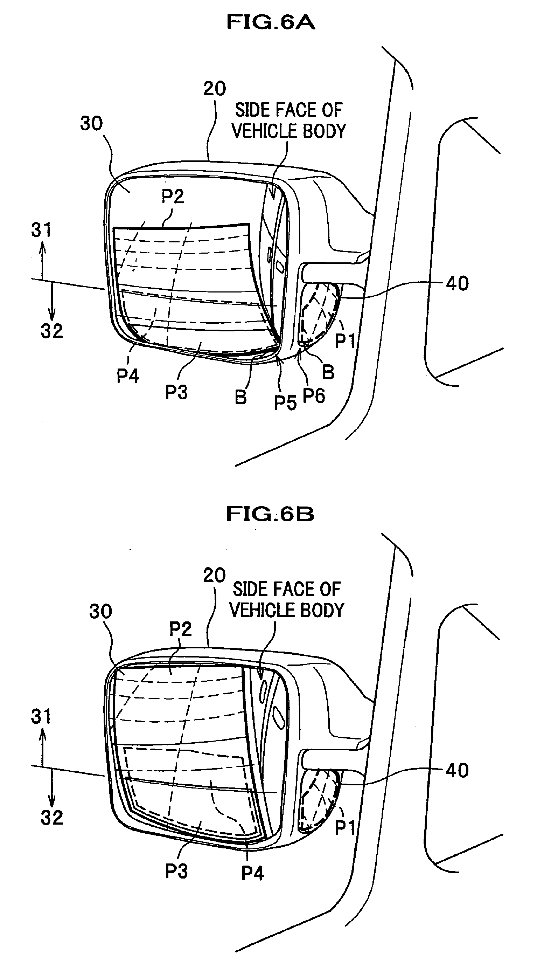

FIG. 4 is a schematic diagram explaining viewing areas reflected by the outer mirror; FIG. 5 is a schematic diagram seen from the side of the vehicle body explaining viewing areas by the outer mirror. Each of FIGs. 6A and 6B is a perspective view showing the outer mirror with a reflected image. FIG. 6A shows an image reflected when a vehicle is in a regular driving mode. FIG. 6B shows an image reflected when a shift lever is in a reverse position. In this embodiment, as to the mirror 30 for rear-viewing, one formed of a spherical (or convex) part 31 as an upper part having a radius of curvature of 700 mm and an aspherical part 32 as a lower part is used. This mirror has the surface that can tilt by a predetermined angle relative to the road surface diagonally backward the passenger seat of the vehicle body as shown in FIG. 6B when a shift lever (not shown) accessible from the driver seat is set in a reverse position. As for the auxiliary mirror 40, one having a radius of curvature of 200 mm and an area of 55 cm² is used.

In FIG. 4, an area P1 bounded by a bold dashed line depicts a viewing area reflected on the auxiliary mirror 40. The viewing area P1 is reflected on the auxiliary mirror 40, as shown in FIGs. 6A and 6B.

Also in FIG. 4, an area P2 bounded by a bold solid line depicts a viewing area reflected on the mirror 30 when the shift lever is in a reverse position. The viewing area P2 is reflected on the mirror 30, and is shown over the spherical part 31 and the aspherical part 32 as shown in FIG. 6B.

Further in FIG. 4, an area P3 bounded by a thin solid line depicts a viewing area reflected on the aspherical part 32 of the mirror 30 when the shift lever is in a reverse position. The viewing area P3 is reflected on the aspherical part 32 of the mirror 30, as shown in FIG. 6B.

Again in FIG. 4, an area P4 bounded by a thin dashed line depicts a viewing area reflected on the aspherical part 32 of the mirror 30 when the vehicle is in a regular driving mode. The viewing area P4 is reflected on the aspherical part 32 of the mirror 30, as shown in FIG. 6A.

As can be seen from the above, it is possible to reflect a wider area covering front and rear sides in the vicinity of the side face of the vehicle body A on the passenger seat side, by use of the outer mirror of the present embodiment including the auxiliary mirror 40 and the mirror 30.

It is assumed that an object B having a height of 1 m and a diameter of 30 cm is placed immediately below the outer mirror on the passenger seat side with the object being brought into contact with the vehicle body A as shown in FIGs. 4 and 5. The image of the object B appears on the corner area P5 of the mirror 30 and the corner area P6 of the auxiliary mirror 40, as shown in FIG. 6A. The reason why the image of the object B is reflected on two mirrors is that the top corners of the object B are covered in the viewing area P1 by the auxiliary mirror 40 and the viewing area P3 by the aspherical part 32 of the mirror 30, as shown in FIG. 5. Therefore, the outer mirror of this embodiment can reflect the image of the object B located within an area immediately below the outer mirror which tends to be a blind spot in general.

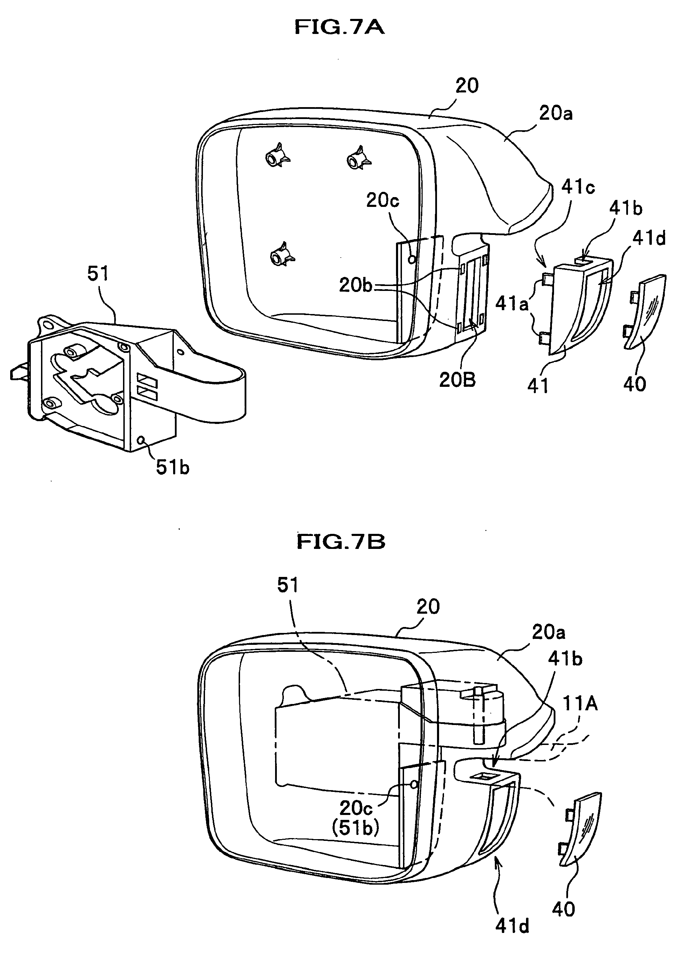

FIGs. 7A and 7B show outer mirrors according to modified embodiments of the present invention.

In the case of the outer mirror shown in FIG. 7A, the mounting member 41 has an upper face in a shape of nearly U with squared corners when seen from above. The upper face and a side face to be attached to a mirror housing 20 have openings 41b and 41c, respectively. On the side face of the mounting member 41 for mounting the auxiliary mirror 40, an opening 41d is provided, and the rim of the opening 41d has a step that engages with hooks formed on the auxiliary mirror 40 to thereby mount the auxiliary mirror 40 on the mirror housing 20.

According to such an outer mirror, the assemblage of the outer mirror can be effectively carried out by utilizing the openings 41b, 41c and 41d on the mounting member 41. In other words, upon fixing the shaft 10A to the protrusion 11A formed on the base main body 11 of the mirror base 10 (see FIG. 3), there may be a problem in that the mounting member 41 having a certain thickness as shown in the first embodiment may hinder the insertion of the fixing screws 10B, and therefore, the mounting member 41 needs to be mounted on the mirror housing 20 after the fixing screws 10B are screwed. With the outer mirror of this modified embodiment, even when the mounting member 41 is mounted on the mirror housing 20 in advance, the fixing screws 10B can be inserted and screwed through the openings 41b and 41d. As a result, alternative processes are possible in the production. Even after the mounting member 41 is mounted on the mirror housing 20, if the auxiliary mirror 40 is not attached to the mounting member 41, the opening 41d is exposed and the interior of the mirror housing 20 is accessible through the opening 41d and the opening 20B. The frame 51 or the like can be fixed with a clinching tool through the opening 41d and opening 20B. Even after the auxiliary mirror 40 is attached to the mounting member 41, disassembly of the frame 51 is easily conducted by removing the auxiliary mirror 40 and exposing the opening 41d.

In the case of the outer mirror shown in FIG. 7B, the mirror housing 20 has a portion integrally formed with the mirror housing 20 that jets out from the lower part of the vehicle body side surface of the mirror housing 20. In other words, in this outer mirror, the mirror housing 20 is integrally formed with the mounting member 41 shown in FIG. 7A.

According to the above outer mirror, it becomes possible to assemble the outer mirror in a manner similar to that explained above in which the openings 41b and 41d provided in the jetting-out portion are utilized. In this case, the step of mounting the mounting member 41 is omitted, and therefore the production process becomes shorter.

According to the outer mirror explained above, the mirror housing 20 has the same structure as conventional mirror housings in that the mirror housing 20 is supported by the protrusion 11A on the upper face 11A1 of the protrusion 11A, i . e . rotatably fixed to the shaft 10A standing upright on upper face of the protrusion 11A. However, the outer mirror of the present invention has the auxiliary mirror 40 positioned below the upper face 11A1 of the protrusion 11A. For this reason, the area diagonally forward the passenger seat of the vehicle body A can be reflected on the outer mirror, unlike the conventional outer mirror. Because of this structure, the improvement in productivity is possible, while the outer mirror with excellent viewability is still achieved.

Since the auxiliary mirror 40 is located below the upper face 11A1 of the protrusion 11A, a space formed under the protrusion 11A can be utilized for effectively reflecting the area diagonally forward the passenger seat of the vehicle body A.

Moreover, since the protrusion 11A is located above the auxiliary mirror 40, the protrusion 11A serves as a visor or eaves for the auxiliary mirror 40. For this reason, the auxiliary mirror 40 is shielded from direct sunlight, rain water and the like, which provides the auxiliary mirror 40 with excellent viewability.

Since the gap S is provided between the vehicle body A and the auxiliary mirror 40, the protrusion 11A does not hinder the viewability of the auxiliary mirror 40 when the auxiliary mirror 40 is seen from the driver seat and the auxiliary mirror 40 is kept exposed to the side face of the vehicle body, even though the structure of the conventional outer mirror is adopted, i.e. the mirror housing 20 is supported by the protrusion 11A on the upper face 11A1 of the protrusion 11A. As a result, the viewability of the auxiliary mirror 40 is improved.

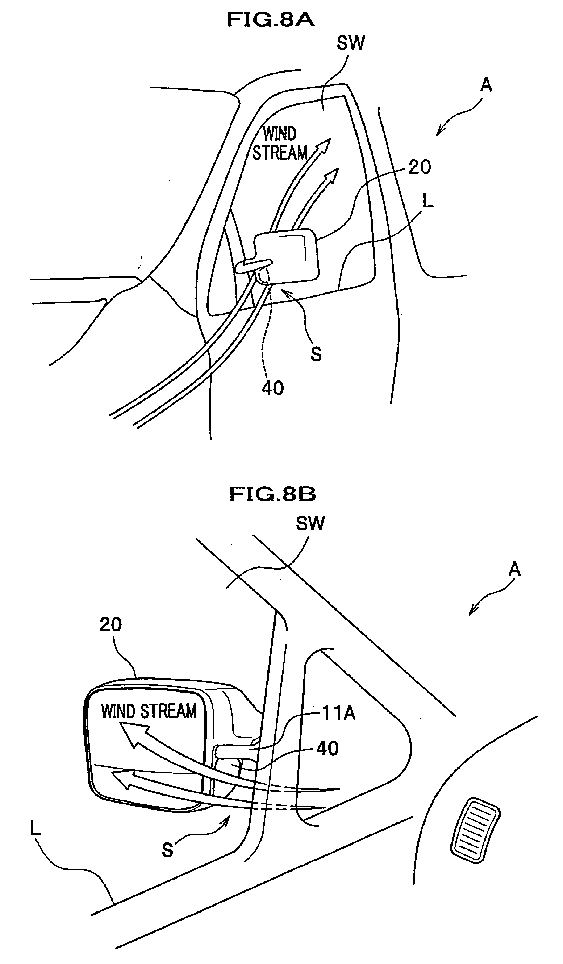

This gap S allows wind stream hitting the outer mirror during running of the vehicle to smoothly pass rearward, as shown in FIGs. 8A and 8B. As a result, turbulence caused by the outer mirror is reduced, which in turn lessens noise including wind roar. At the same time, wind stream passing through the gap S will blow off rainwater or the like attached to the auxiliary mirror 40. Such a stream passing through the gap S will further blow off rainwater or the like attached to the side window SW of the vehicle. Therefore, a clear area which is located on the sight line from the driver seat to the outer mirror is secured on the side window SW.

Since the auxiliary mirror 40 is located above the bottom edge line L of the side window SW of the vehicle body A, the auxiliary mirror 40 and the side window SW are situated side by side. For this reason, the auxiliary mirror 40 can be securely checked from the driver seat. It should be noted that the auxiliary mirror 40 may be located below the bottom edge line L, as long as the auxiliary mirror 40 can be seen from the driver seat.

When the outer mirror is mounted on the vehicle body A at such a position, the protrusion 11A located above the auxiliary mirror 40 is positioned higher than the protrusion of the conventional outer mirror 100 of FIG. 11. Therefore, the protrusion 11A is to be located out of the sight line from the driver seat to the auxiliary mirror 40, even though the structure of the conventional outer mirror is adopted, i.e. the mirror housing 20 is supported by the protrusion 11A on the upper face 11A1 of the protrusion 11A.

Since the auxiliary mirror 40 is located under the end part of the protrusion 11A, the gap S between the side face of the vehicle body A and the auxiliary mirror 40 is effectively secured by the protrusion 11A extending laterally from the side face of the vehicle body A. Therefore, the outer mirror with the auxiliary mirror 40 that can securely reflect the area diagonally forward the side face of the vehicle body A is easily obtained.

The gravity center G of the mirror housing assembly is located laterally away from the protrusion 11A in the protruding direction of the protrusion 11A, which achieves the following effects. In the case of the conventional outer mirror as shown in FIG. 11 in which the whole assembly of the mirror housing 113 is located above the protrusion 100, the gravity center of the assembly will not be located laterally away from the protrusion 100 in the protruding direction of the protrusion 100, but further away in the upward oblique direction. In the case of the outer mirror of the present embodiment where the gravity center G of the mirror housing assembly is located away from the protrusion 11A in the protruding direction of the protrusion 11A (horizontal direction) as shown in FIG. 2, the distance LG between the root (fixing portion) of the protrusion 11A and the gravity center G is shorter than that of the outer mirror shown in FIG. 11, so that the mirror housing 20 is held stably. Therefore, the vibration of the mirror housing 20 during running of the vehicle is lessened effectively.

Further, the driving device 50 held in the mirror housing 20 is located above the upper face of the protrusion 11A. Thus, the structure of the conventional outer mirror as shown in FIG. 11 can be adopted, which allows the use of the components including the driving device 50 available on the market. As a result, the productivity is improved.

### (Second embodiment)

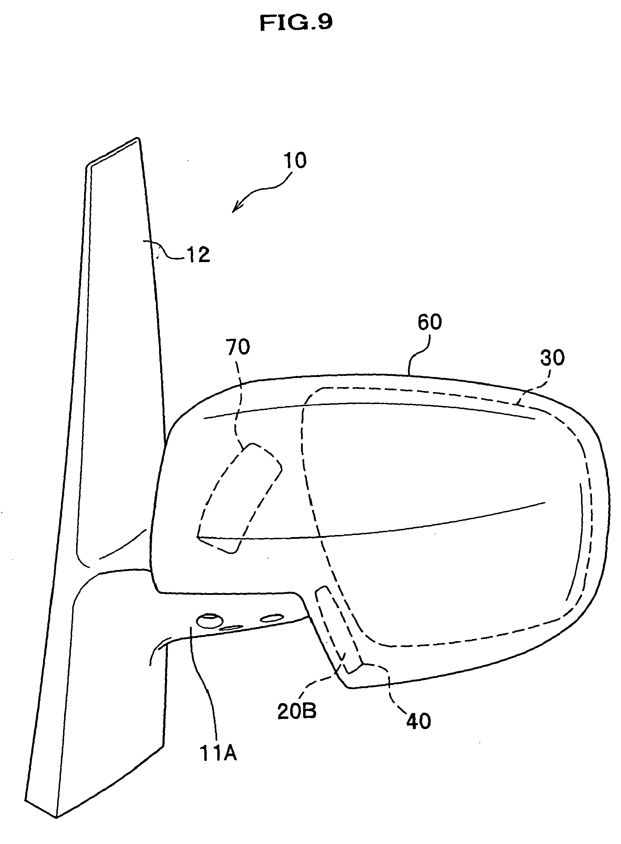

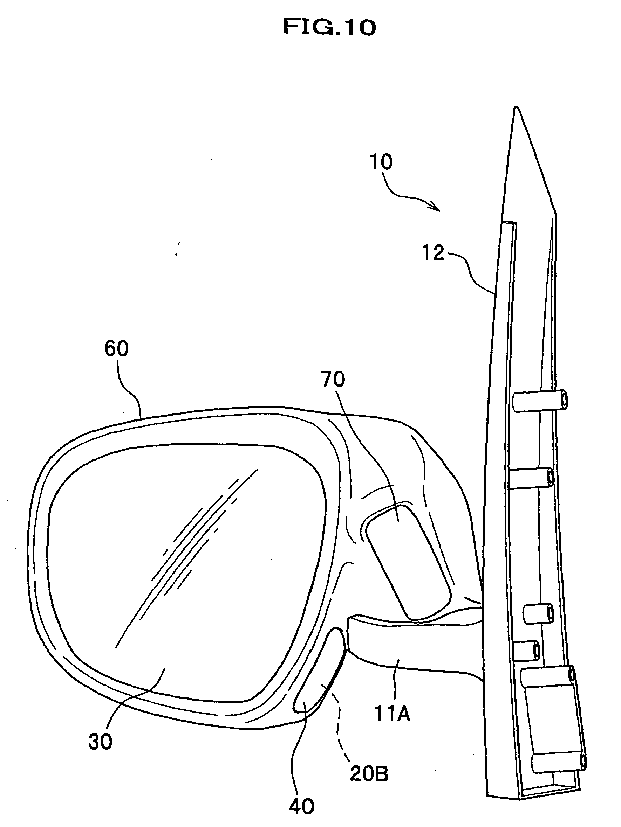

An outer mirror according to a second embodiment of the present invention is characterized in that an auxiliary rear view mirror 70 is introduced, as shown in FIGs. 9 and 10.

The auxiliary rear view mirror 70 is mounted on the mirror housing 60 at the position above the protrusion 11A (upper portion 60a on the side of the mirror housing 60). The mirror surface of the auxiliary rear view mirror 70 tilts down so as to slantingly face the ground. By introducing this auxiliary rear view mirror 70, the area around the rear side of the vehicle body A can be reflected.

According to this outer mirror, the area diagonally backward the side face of the vehicle body A can be checked by use of the auxiliary rear view mirror 70. When the auxiliary rear view mirror 70 being combined with the mirror 30 for viewing behind, the areas behind the vehicle body A, including those which in general cannot be seen from the driver seat, can be easily checked. In addition, since the auxiliary rear view mirror 70 is mounted on the mirror housing 60 at the position above the protrusion 11A, the shift of the sight line from the rear view mirror 30 is maintained minimum, which gives excellent viewability.

In the outer mirror of this embodiment, the auxiliary mirror 40 is mounted on the mirror housing 60 so that the auxiliary mirror 40 covers the opening 20B formed on the lower part of the vehicle body side surface of the mirror housing 60. Therefore, prior to covering the opening 20B with the auxiliary mirror 40, the interior of the mirror housing 20 is accessible from the opening 20B, similar to the outer mirror of the first embodiment previously mentioned.

The embodiments of the present invention have been described. However the present invention should not be limited to the embodiment mentioned above, and it is a matter of course that the above embodiments may be properly modified.

In each of the above-mentioned embodiments, the auxiliary mirror 40 is used for reflecting the area diagonally forward the passenger seat of the vehicle body A. However, the auxiliary mirror 40 may be used for reflecting the area in the vicinity of the front wheel on the passenger seat side, by altering the angle of the auxiliary mirror 40 when the auxiliary mirror 40 is mounted on the mirror housing 20. Alternatively, a driver can select a reflection angle based on his/her preference, by selecting a suitable mounting member 41 among various mounting members 41.

The configuration of the mounting member 41, radius of curvature of the auxiliary mirror 40 and the like can be appropriately selected based on the type of the vehicle on which the outer mirror is mounted.

In the above-described embodiments, the outer mirror is configured so that the mirror housing 20 is fixed to the protrusion 11A protruding from the base main body 11 of the mirror base 10. However, there is no limitation with respect to the configuration, and'the mirror base may be formed of the protrusion 11A alone. In other words, the protrusion 11A may be fixed directly to a pillar or a mounting stage of the vehicle body A, or to a front bottom corner of the side window SW in such manner that the protrusion 11A protrudes laterally away from the vehicle body A.

In the above-described embodiments, the outer mirror is mounted on the passenger seat side. However, the outer mirror may be mounted on the driver seat side. In this case, the auxiliary mirror 40 may be mounted on the mirror housing 20 in such manner that the auxiliary mirror 40 reflects the area around the rear side of the vehicle body A.

In the above-described embodiments, the outer mirror is an electrically operated retractable mirror. However, there is no limitation with respect to the outer mirror, and the mirror may be a manually operated retractable mirror, or a fixed type mirror.

Further, the vehicle body side surface of the mirror housing 20 may be in a flat shape without the opening 20B.

## Claims

1. An outer mirror comprising:
a mirror base 10 having a protrusion 11A extending laterally from a side face of a vehicle body A in use;
a shaft 10A extending upwardly from the protrusion 11A;
a mirror housing 20 rotatably mounted on the shaft 10A;
a mirror 30 m6unted on the mirror housing 20, which mirror 30 is for reflecting a rear view; and
an auxiliary mirror 40 mounted on the mirror housing 20, which auxiliary mirror 40 is for reflecting an area diagonally forward along the side face of the vehicle body A,
wherein
the auxiliary mirror 40 is located below an upper face 11A1 of the protrusion 11A.

2. The outer mirror according to claim 1, wherein a gap S is provided between the vehicle body A and the auxiliary mirror 40.

3. The outer mirror according to claim 1 or 2, wherein the auxiliary mirror 40 is located under an end part of the protrusion 11A.

4. The outer mirror according to any one of claims 1 to 3, wherein a gravity center G of an assembly of the mirror housing 20 is located laterally away from the protrusion 11A in the protruding direction of the protrusion 11A.

5. The outer mirror according to any one of claims 1 to 4, further comprising an auxiliary rear view mirror 70 for reflecting an area diagonally backward along the side face of the vehicle body A, which auxiliary rear view mirror 70 is provided on the mirror housing 20 at the position above the protrusion 11A.

6. The outer mirror according to any one of claims 1 to 5, further comprising a driving device 50 for rotating the mirror housing 20 relative to the protrusion 11A, which driving device 50 is held at the position above the protrusion 11A in the mirror housing 20.

7. The outer mirror according to any one of claims 1 to 6, wherein the auxiliary mirror 40 is located above a bottom edge line L of a side window of the vehicle body A in use.
